(19) **Europäisches Patentamt European Patent Office Office européen des brevets**

(11) **EP 2 359 431 B1**

(12) **EUROPEAN PATENT SPECIFICATION**

(45) Date of publication and mention of the grant of the patent:
**27.02.2013 Bulletin 2013/09**

(21) Application number: **09764323.3**

(22) Date of filing: **20.11.2009**

(51) Int Cl.:
*H01M 8/22* (2006.01)          *B01D 61/42* (2006.01)
*C02F 1/44* (2006.01)

(86) International application number:
**PCT/NL2009/050705**

(87) International publication number:
**WO 2010/059053 (27.05.2010 Gazette 2010/21)**

(54) **DEVICE AND METHOD FOR PERFORMING AN ELECTRODIALYSIS OR A REVERSE ELECTRODIALYSIS PROCESS**

EINRICHTUNG UND VERFAHREN ZUM DURCHFÜHREN EINES ELEKTRODIALYSE- ODER UMKEHRELEKTRODIALYSEPROZESSES

DISPOSITIF ET PROCÉDÉ DE RÉALISATION D'ÉLECTRODIALYSE OU D'ÉLECTRODIALYSE INVERSE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.11.2008   NL 1036233**

(43) Date of publication of application:
**24.08.2011   Bulletin 2011/34**

(73) Proprietor: **Redstack B.V.
8606 JR Sneek (NL)**

(72) Inventors:
• **POST, Jan Willem**
  **NL-8934 CJ Leeuwarden (NL)**
• **METZ, Sybrand**
  **NL-8934 CJ Leeuwarden (NL)**
• **HOEKSTRA, Watse**
  **NL-8934 CJ Leeuwarden (NL)**
• **LEIJSTRA, Petrus Antonius Johannes**
  **NL-8934 CJ Leeuwarden (NL)**

(74) Representative: **Verdijck, Gerardus et al
Arnold & Siedsma
Sweelinckplein 1
2517 GK Den Haag (NL)**

(56) References cited:
**EP-A1- 1 598 318          EP-A2- 0 856 351
US-A- 3 761 386          US-A1- 2007 138 008**

**Description**

The present invention relates to a device for performing an electrodialysis or a reverse electrodialysis process. These processes are membrane-based techniques. Electrodialysis is, for example, used for desalination or mineral recovery. Reverse electrodialysis is, for example, used for the generation of energy by mixing, for example, river water and sea water.

Known devices for performing an electric dialysis or a reverse electric dialysis process use several ion-exchange membranes. In these devices a number of cation and anion exchange membranes are stacked in an alternating pattern between a cathode and an anode. Adjacent membranes are kept at a distance to form electrolyte compartments between the membranes. To ensure that this distance between the membranes is maintained so-called spacers are used in the device.

US 2007/0138008 discloses a spacer element for use in filled cell electrodialysis having a continuous portion and a screen or mesh.

Spacers contribute to the pressure drop over the device. Also, spacers occupy part of the (effective) membrane surface. A repeating unit or cell-pair consists of a cation exchange membrane, an electrolyte compartment filled with a spacer and the concentrated salt solution, an anion exchange membrane and an electrolyte compartment filled with a spacer and the diluted salt solution. In case of electrodialysis an electrical potential is the driving force for transport of ions through the membranes. In case of reverse electrodialysis the salinity gradient between dilute and concentrate is the driving force for this transport. In case of sodium chloride solutions the sodium ions permeate through the cation exchange membrane in the direction of the cathode and chloride ions permeate through the anion exchange membranes in the direction of the anode. To maintain the electric neutrality of the solution in the anode compartment oxidation reactions take place at the anode surface. In the cathode compartment a reduction reaction takes place at the cathode surface. The known devices suffer from internal losses thereby reducing the efficiency of the process.

The present invention has for its object to improve the efficiency of an electrodialysis and/or reverse electrodialysis process, especially by decreasing internal losses in these devices.

This object is achieved with the device according to the invention for performing an electrodialysis or a reverse electrodialysis process comprising:

- a number of anode compartments provided with an anode placed in an anode fluidium comprising reagents for an oxidation reaction;
- a number of cathode compartments, separated from the anode compartments, provided with a cathode placed in a cathode fluidium comprising reagents for a reduction reaction;
- a number of cation exchange membranes and anion exchange membranes, placed alternately between the cathode and the anode, whereby electrolyte compartments are formed between the cation exchange membranes and the anion exchange membranes; and
- a number of intermediate layers placed between two adjacent membranes in at least a part of the electrolyte compartments, wherein each layer is provided with channels and wherein the channels of the intermediate layers are arranged such that a fluid flows through the electrolyte compartments.

By providing a number of intermediate layers between two adjacent membranes in an electrolyte compartment separate spacers are not required. The number of intermediate layers in one electrolyte compartment can be one or more. Each layer is provided with channels for allowing the fluid to flow through the electrolyte compartment. At least a part of the electrolyte compartments are provided with a number of intermediate layers.

In one embodiment all compartments are provided with such layers. In an alternative embodiment the electrolyte compartments are alternately provided with one or more intermediate layers. Preferably, the compartments for the salt solution are provided with a number of layers with channels. Also preferably, the intermediate layers are connected to the membranes at the boundaries of the compartment. This connection can be achieved by gluing, for example. The connection makes a relatively rigid unit of a cation and adjacent anion exchange membrane with the electrolyte compartment filled with the layer(s). This enables the compartments for the diluted salt solutions to be open, i.e. no spacer or intermediate layers in these compartments. The rigid units will prevent the membranes to contact each other. Preferably, the electrolyte compartments for the diluted salt concentrations are made smaller. This reduces the ohmic resistance. The with of this open compartment can be reduced as the width is no longer limited by the thickness of a spacer. (In practice the minimal width of the compartment is twice the thickness of the fibers of the spacer.) The width of the compartments with the concentrated salt solution can be increased without changing the overall dimensions of the device according to the invention. This enables a more open structure for the intermediate layer without significantly increasing the ohmic resistance as the conductivity is relatively high due to the salt concentration.

Although the use of intermediate layers with channels is preferred when alternately having an open electrolyte compartment and an electrolyte compartment filled with at least one intermediate layer, it is also possible to use a known spacer of a known material used for spacers in an alternately manner. This would limit the number of spacers used in the device and would have the beneficial effects described above. These effects include the possibility for a relatively open structure for the spacer in the compartment with the salt solution, and minimal width of the other type of electrolyte compartment.

The internal losses in electrodialysis and reverse electrodialysis are (partly) due to ionic transport, especially in the compartments filled with the dilute as this fluid has a relatively low conductivity.

In the invention it is recognized that the screen spacers are also a major contributor to the internal losses of these operations. This can be illustrated by the following equations describing the ohmic internal electrical resistance of a stack of membranes.

$$R = A \cdot \sum_N r \qquad\qquad [1]$$

$$r = \frac{r_{cem}}{(1-\beta)} + \frac{h}{\varepsilon^2 \cdot \kappa_c} + \frac{r_{aem}}{(1-\beta)} + \frac{h}{\varepsilon^2 \cdot \kappa_d} \qquad\qquad . \ [2]$$

wherein A is the current passing area of a single membrane ($m^2$) and r the area specific resistance of a single cell-pair ($\Omega m^2$).

The area specific resistance of a single cell-pair consists of a four terms:

- the area specific resistance of a cation exchange membrane $r_{cem}$ ($\Omega m^2$),
- that of the compartment filled with a spacer and a concentrated salt solution,
- that of the anion exchange membrane $r_{aem}$($\Omega m^2$),
- and that of the compartment filled with a spacer and a diluted salt solution,

wherein $\beta$ is the portion of membrane area that is masked by the spacer (-) referred to as the shadow factor, h is the compartment or spacer width (m), $\varepsilon$ the porosity (-) of the spacer (the porosity is squared to reflect the tortuous ion transport), k the conductance of solutions (S/m). From available spacer geometries indicative values for $\varepsilon^2$ are in the range of about 0.4-0.6 and for $\beta$ in the range of about 0.1-0.5.

The above equations are presented as an indication of the relevance of the spacers in existing electrodialysis and reverse electrodialysis processes on the internal losses. From this analysis it is concluded that a spacer is an undesired isolator in these processes. This holds for both screen spacers and so-called tortuous path spacers. These path spacers have additional disadvantages, as they are a type of gasket with a long winding part from inlet to outlet in which the velocity of the fluid in the channels should be relatively high to obtain a turbulent flow. Also considering the length and the presence of numerous bends in the channels the flow resistance will be relatively high. This results in a relatively high pressure drop over the stack of membranes to assure a certain stiffness or strength. Also, the membranes are required to have a relatively high thickness to be able to span the part. This leads to a relatively high electrical resistance over the stack with a high voltage drop as a result.

A further advantage of using intermediate layers as compared to the screen spacers, for example, which are often formed by woven structures with a given warp and weft distance, is that the dimensions of the channels can be chosen depending on the specific requirements of the process. Preferably the channels of an intermediate layer extend substantially in one direction. By extending the channels in one direction the number of bends in the intermediate layer in an electrolyte compartment is significantly reduced. This reduction minimizes the flow resistance in this compartment. This improves the overall efficiency of the process.

Preferably, the channels of at least two adjacent intermediate layers in one electrolyte compartment are arranged in different directions such that fluid is able to flow through the at least two layers. Even more preferably, the channels of the at least two adjacent intermediate layers extend in lengthwise direction with an angle of about 90°. As an example, this means that in case one intermediate layer is provided with channels in a horizontal direction an adjacent intermediate layer has channels in a vertical direction. For a fluid to flow from input to output of the electrolyte compartment this fluid openly flows for a short period of time through a horizontal channel of one intermediate layer and next for a short period of time in a vertical channel of an adjacent intermediate layer. Next, the fluid returns to a different horizontal channel of the first intermediate layer. Preferably no short-cuts are provided between channels in one intermediate layer. Although it is possible, according to the invention, to provide different layers of channels in one intermediate layer it is, for reasons of manufacturing for example, more efficient to provide different intermediate layers in one electrolyte compartment. By having channels in different intermediate layers that are oriented in a different direction the strength of the stack is increased as the ribbons or walls of the horizontal and vertical channels cross. As compared to the path spacers, the thickness of the membranes can be reduced while still obtaining similar process efficiencies. This results in a reduction in the overall dimensions of the process. Also, for a given volume of cells and membranes, an increased number of membranes can be used thereby achieving an increased capacity for the process. Obstructions in the flow path in the form of sidewalls of the channels will distribute the fluid flow similar to a stack with screen spacers. Therefor, even without short cuts between channels in one intermediate layer, it is possible to have a limited number of manifolds as inputs and outputs for the fluid flow through an electrolyte compartment. In addition, the obstruction by the channel walls, or ribbons enhances flow velocities in the direction perpendicular to the membranes. This results in a decrease in concentration polarization effects.

In a preferred embodiment according to the present invention, the channels are arranged in the intermediate layers such that a uniform distribution of the fluid over the electrolyte compartment is achieved.

By providing channels in different intermediate layers, the configuration of these channels over the layer can be chosen such that a uniform distribution of the fluid over the entire compartment can be achieved. For example, the number of channels or the width of the channels on the side of the electrolyte compartment can be increased in size to assure that a certain amount of fluid will flow through these parts of the electrolyte compartment. In addition, the area of crossings of sidewalls of the channels in the centre of the electrolyte compartment can be increased to improve the support for the membranes. This may contribute to reducing the thickness of the membranes whilst maintaining a certain stiffness or strength for the entire stack.

Preferably the intermediate layers comprise silicon gaskets extending over substantially the entire surface of the membranes. Channels are provided in these silicon gaskets such that it is possible to optimize the configuration of the channels in view of the overall efficiency of the process. Preferably, the intermediate layers are provided with a thickness of about 50-500 $\mu$m and more preferably of about 100-300 $\mu$m. The number of intermediate layers depends on the thickness of the intermediate layers and the overall design parameters of the device. By providing a device according to the invention the intermediate layer preferably is provided with a porosity over 80% and more preferably over 90%. This porosity is the flow volume including channel wall material for example. These high porosity values are not achieved in existing devices for electrodialysis and/or reverse electrodialysis as more material is required to provide sufficient strength to the device. The increased porosity with the device according to the invention results in an increase of the effective surface area in the process. Therefore, the capacity of a device with the same dimensions will increase and/or the required dimensions for a similar capacity compared to existing devices will decrease. Besides using silicon as material for the intermediate layers it is also possible to use (synthetic) rubber, plastics and oil paper. It would also be possible to use other materials normally used as gasket-material. It would also be possible to use the same material as is used for the membranes, although this may result in additional leakages from the device.

In a preferred embodiment according to the present invention, the intermediate layer is integrated with a membrane.

By integrating the membrane with an intermediate layer the manufacturing of the device can be improved or be performed more efficient. This integration results in a laminate part that can be assembled in a stack for the device. Additionally, by integrating the membrane with the intermediate layers assembly requires less effort.

In a further preferred embodiment according to the present invention the device further comprises a means for providing a gas flow through at least a part of the compartments.

A possible solution for the increase of the non-ohmic resistance is the introduction of a gas flow along the membranes. A gas that can be used is air. Preferably, the gas flow is in the same direction as the fluid flowing through the compartments between two membranes. A gas flow can be achieved by creating gas inlets on the bottom side of at least some of the electrolyte compartments for dispersing the gas-flow through the fluid. By this, the dispersion of the solution flow trough the compartments can be improved. The gas bubbles can increase the speed of the flow through the compartment, and may result in better mixing of the surface layers.

The present invention also relates to a method for generating electric energy or performing an electrodialysis, comprising the steps of providing a device as described above and electrically connecting the anode and cathode. Such method provides the same effects and advantages as those stated with reference to the device.

Further advantages, features and details of the invention are elucidated on a basis of preferred embodiments thereof, wherein reference is made to the accompanying drawings:

- figure 1 a schematic overview of the device according to the invention;
- figure 2 a schematic overview of a stack of layers in the device of figure 1 ; and
- figure 3 experimental results with the device of figure 1.

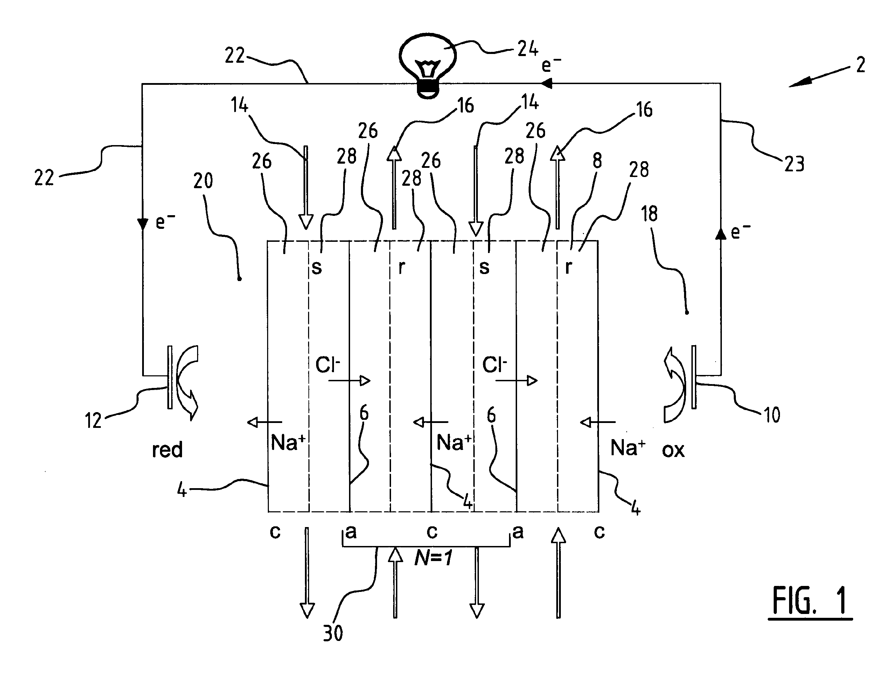

In a system 2 (figure 1) for a reversed electrodialysis process, a number of cation exchange membranes and anion exchange membranes 6 are placed between the anode 10 and the cathode 12. Between the anion exchange membranes 6 and cation exchange membranes 4 electrolyte compartments 8 are formed, wherein alternatingly sea water (s) 14 and river water (r) 16 flows. Due to the concentration differences of electrolytes in the sea water 14 and river water 16, the electrolytes in the sea water 14 will be inclined to move to the river water 16 to level the concentrations. For simplicity in figure 1 only sodium and chlorine ions are presented as positive and negative ions.

As the anion exchange membranes 6 only allow anions to pass and the cation exchange membranes 4 only allow cations to pass, transport of anions and cations will proceed in opposite directions. The anions (Cl$^-$) will move in the direction of anode 10, and the cations (Na$^+$) will move in the direction of the cathode 12. In order to maintain electric neutrality in the compartments 18 where the anode 10 is placed, an oxidation reaction takes place. In the compartment 20 wherein the cathode 12 is placed, a reduction reaction takes place. Hereby a flow of electrons is generated in the electric circuit 22,23,24 wherein the anode 10 and cathode 12 are connected. In this electric circuit electric work is performed by an electric apparatus 24, here symbolically presented by means of a bulb. In the compartments 8 with flows of e.g. sea water 14 and river water 16 two layers of gaskets 26,28 are arranged. In the illustrated embodiment layer 26 has horizontal ribbons or guides and layer 28 has vertical ribbons or guides. A dialytic cell 30 is formed by a membrane couple of an anion exchange membrane 6 and a cation exchange membrane 4 and a mass of a solution having a low and a high electrolyte concentration. The number (N) of dialytic cells 30 (here N=1) may be increased to increase the potential difference between the anode and the cathode.

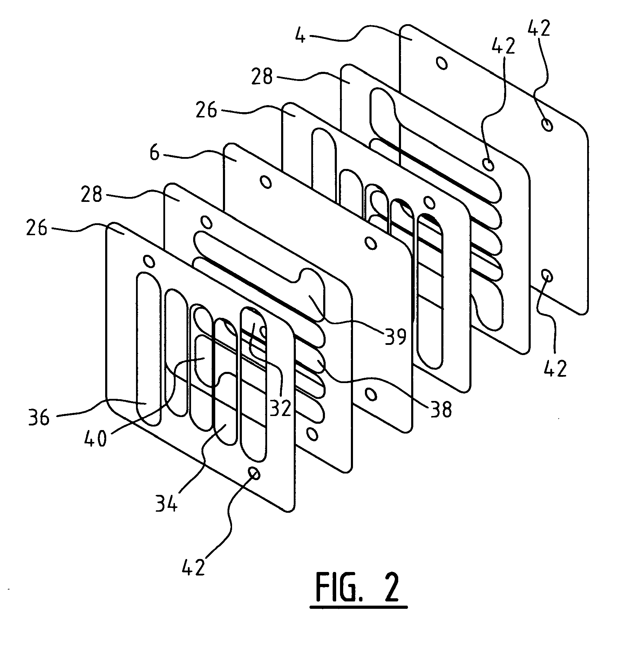

A stack of device 2 (figure 2) comprises a layer 26 with, in the illustrated embodiment, vertical channels 34 and an outlet 32. The channels run parallel to each other in vertical direction. One of the vertical channels 34 on the side of intermediate layer 26 is provided with an outlet 32. On the other extreme side of the same intermediate layer 26 vertical channel 34 is provided with an inlet 36. The adjacent intermediate layer 28 is provided with horizontal channels 38 of which one channel 38 has an outlet 39. This outlet 39 is provided in a channel on the top of intermediate layer 28 as illustrated. An inlet 40 is provided in the horizontal channel 38 on the other side of intermediate layer 28. The two outlets 32, 39 of adjacent intermediate layer 26, 28 are dimensioned so that they are provided at the same location in the stack of device 2. The same holds for inlets 36, 40 of intermediate layers 26, 28. Fluid is provided to inlets 36, 40 and removed out of the intermediate layer 26, 28 from outlet 32, 39 by so-called manifolds 42. Intermediate layers 26, 28 are placed in a electrolyte compartment that is formed between two membranes 4, 6. The stack of intermediate layers 26, 28 and membranes 4, 6 is kept together in a similar way as for known devices.

Experiment

Device 2 was tested, results of which are shown for a reverse electrodialysis operation. The device used consisted of five cation exchange membranes. (Neosepta CMS; Tokuyama Co., Japan) and four anion exchange membranes (Neosepta ACS; Tokuyama Co., Japan) that are piled in an alternating pattern between a cathode and an anode (both of stretched Titanium with a Ruthenium/Iridium Mixed Metal Oxide coating with a specific surface of 1 m$^2$ /m$^2$; Magneto Special Anodes B. V., The Netherlands). The active area of each membrane was 104 cm$^2$, the area of electrodes 100 cm$^2$. The repeating unit is called a cell-pair, which consists of a cation exchange membrane, a compartment filled with a concentrated salt solution ('sea water'), an anion exchange membrane, and a compartment filled with a diluted salt solution ('river water'). The compartments were formed with silicone intermediate layers. The stack for the device according to the invention was compared to a more conventional device.

Differences between the stack according to the invention compared to existing stacks include the applied type of gasket and spacer, or its absence. One stack was provided with a PET fabric with a thickness of 500$\mu$m (Nitex 06-700/53, Sefar) in a 500$\mu$m silicone gasket, the other stack was not provided with a spacer and had two layers of gasket. One gasket was a 300$\mu$m silicone gasket with horizontal ribbons on top of a 200$\mu$m silicone gasket with vertical ribbons. Relevant parameters of both stacks are shown in Table 1.

Table 1: Characteristics of stack with spacer and stack without spacer

| | unit | Stack with spacers, 06-700/53 | Stack without spacers |
|---|---|---|---|
| Inter membrane distance | $\mu$m | 500 | 300+200 |
| Porosity, $\varepsilon$ | - | 80% | >90% |
| Tortuosity, $\varepsilon^2$ | - | 0.64 | 0.8-0.9 |
| Open area | - | 53% | >80% |
| Shadow, $\beta$ | - | 0.47 | <0.2 |

The intermediate layers have a rectangular shape with a length and a width of 150 mm. Corners are provided with a radius of 10 mm. The diameter of the manifolds is 8 mm. The center of the manifolds lies 16 mm from the edge of the layer. The channels start and end 26 mm from the edge. The layer is provided with five channels of 98 mm length. The channels on the outside have a width of 20 mm. The inner channels have a width of 18 mm. The barriers or sidewalls of the channels have on the outside a width of 3 mm and between the inner channels 2 mm.

The concentrated salt solution (0.5 M NaCl, 'sea waster'), the diluted salt solution (5mM NaCl, 'river water'), and an electrode rinse solution (0.25 M NaCl, 'brackish water') were fed to the stacks with a flow rate of 57.5 ml/min. The solutions were recycled over bottles stored in a thermostatic bath (with a temperature of $25 \pm 1°C$). Each bottle contained 500 mL of the described solutions. Before each experiment, the stacks and tubes were flushed and filled with matching solutions. Each stack including connected tubing had an estimated system volume of 50 mL. The total batch volume of each solution was accordingly 550 mL.

The electrodes were connected to a galvanostat (IviumStat Electrochemical Interface & Impedance Analyse; Ivium Technologies, The Netherlands) for generation of a square-wave signal with cycles of 20 s period of zero current conditions (open circuit) followed by a 1,000 s period with an adjusted current level of 100 mA (i.e. a current density of 10 A/m². The corresponding stack voltage was measured with an interval of 0.2 s. For the measurement of the stack voltage, Ag/AgCl reference electrodes were used, in order to leave losses associated with electrode reactions out of consideration. The reason to exclude the potential losses at the electrodes was the fact that in a stack with a limited number of cell-pairs (like in the used stacks) these losses would be dominant, whereas in practice, with a high number of cell-pairs these losses could be neglected. The reference electrodes were placed within reservoirs that were connected to measurements compartments via Haber-Luggin capillaries. The tips of the salt-bridge probes were placed adjacent to the outside membranes (distance of 3 mm).

The potential-transients measured with the reference electrodes occurring as a result of the periodical current-steps, could be interpreted as in a conventional current-interrupt technique. The potential-transients resulting from each current-pulse provides each 1,200 s the actual internal resistance of the electrodialytic pile (membranes and solution compartments only). Since each current-pulse consists of a successive current-interrupt and a current-supply which gives two opposite potential-transients, the actual internal resistance is measured twice. From the potential-transients, the actual internal loss could be divided into an ohmic part and a non-ohmic part. The instantaneous potential-jump resulting form a current-step could be related to the ohmic losses due to the ionic transport through the bulk solutions and the membranes. The following time-dependant potential change could be related to the non-ohmic losses due to the concentration polarization at the membrane surfaces.

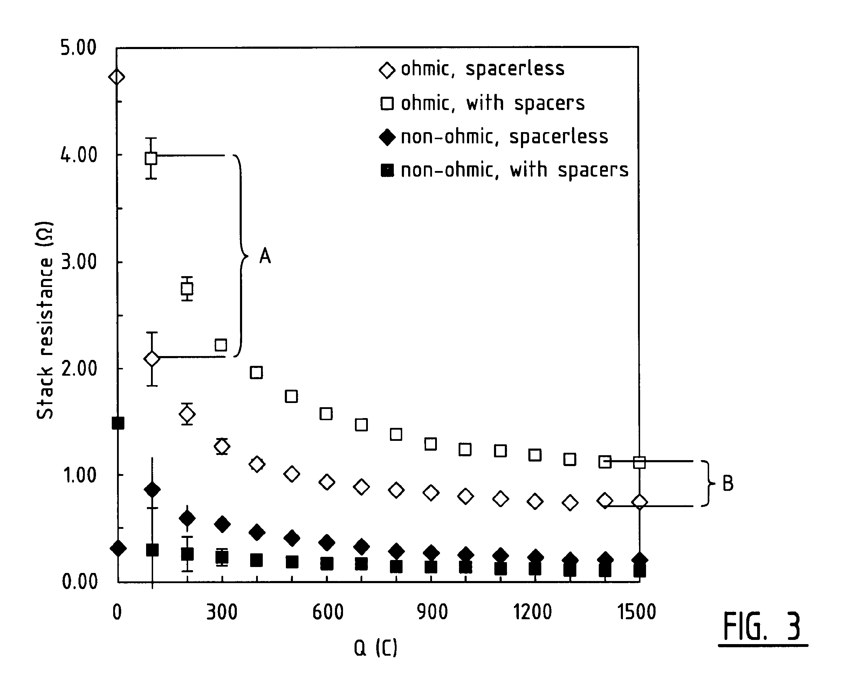

The internal stack resistance decreases during the experiments, as the concentration and thus the conductivity of the diluted solution, is increasing with the amount of transferred charge Q (C) (figure 3). At the starting conditions, the main contributor to the stack resistance is the diluted solution compartment, i.e. the ionic transport through the low-conducting bulk solution and the tortuosity in Table 1, the spacerless design resulted in a remarkable lower ohmic resistance of about factor 2. However, the non-ohmic resistance of the spacerless stack was somewhat higher possibly due to a higher concentration polarization than in a stack with spacers (turbulence promoters). At a higher extent of charge transfer, it can be derived that the main contributors to the resistance are the membranes and the masked are due to the spacers. Apparently, the shadow factors of the spacerless design on the membranes is lower, as was suggested from the specifications in Table 1.

The results show that design of a stack and device according to the invention has a beneficial effect on the ohmic resistance of the stack as compared to a more conventional design. Therefore, an increase of capacity and/or decrease in required dimensions for the stack with equal capacity can be obtained. This will improve the overall efficiency of an electrodialysis and/or reverse electrodialysis process.

However, from the results it can be concluded that the non-ohmic resistance increased in the spacerless system. This could be explained by the fact that the obstructions for the solution flow decrease when the dense structures of the spacer are replaced with the more open structure in the spacerless design. This causes a decrease in turbulence of the solution flow trough the compartments. This means that the solution flow trough the compartment flows more direct from the inlet to the outlet without dispersing the solution throughout the compartment. Therefore, the concentration of ions at the solution surface layer of the membrane at the concentrated side decreases and at the dilute side increases (concentration polarization), i.e., resulting in an increase of the non-ohmic voltage drop.

A possible solution for the increase of the non-ohmic resistance is the introduction of a gas flow (for example air) along the membranes (in the same direction as the solution flows), flowing through the compartments between two membranes. This can be achieved by creating gas inlets on the bottom side of the solution compartments for dispersing the gas-flow trough the solution flow. By this, the dispersion of the solution flow trough the compartments can be improved. The gas bubbles can increase the speed of the flow through the compartment, and may result in better mixing of the surface layers.

The present invention is by no means limited to the above described preferred embodiments. The rights sought are defined by de following claims, within the scope of which many modifications can be envisaged.

**Claims**

1. Device (2) for performing an electrodialysis or a reversed electrodialysis process, comprising:

   - a number of anode compartments (18) provided with an anode (10) placed in an anode fluidium comprising reagents for an oxidation reaction;
   - a number of cathode compartments (20), separated from the anode compartments, provided with a cathode (12) placed in a cathode fluidium comprising reagents for a reduction reaction;
   - a number of cation exchange membranes (4) and anion exchange membranes (6), placed alternately between the cathode and the anode, whereby electrolyte compartments (8) are formed between the cation exchange membranes and the anion exchange membranes; and
   - a number of intermediate layers (26, 28) placed between two adjacent membranes in at least a part of the electrolyte compartments, wherein each layer is provided with channels, **characterized in that** the channels are provided in different intermediate layers, and wherein the channels (34, 38) of the intermediate layers are arranged such that a fluid flows through the electrolyte compartments.

2. Device (2) according to claim 1, wherein the channels of an intermediate layer extend substantially in one direction.

3. Device (2) according to claim 2, wherein the channels of at least two adjacent intermediate layers in one electrolyte compartment are arranged in different directions such that in use the fluid flows through the at least two layers.

4. Device (2) according to claim 3, wherein channels of the at least two adjacent intermediate layers extend in lengthwise direction with an angle of about 90°.

5. Device (2) according to any of claims 1-4, wherein the channels are arranged in the intermediate layer such that in use a uniform distribution of the fluid over the electrolyte compartment is achieved.

6. Device (2) according to any of the claims 1-5, wherein the intermediate layers comprise silicon gaskets extending over substantially the entire surface of the membrane.

7. Device (2) according to claims 1-6, wherein the intermediate layers are provided with a thickness of about 50-500 $\mu$m, preferably of about 100-300 $\mu$m.

8. Device (2) according to one of the claims 1-7, wherein the intermediate layer is provided with a porosity above 80%, preferably above 90%.

9. Device (2) according to any of claims 1-8, wherein the intermediate layer is integrated with a membrane.

10. Device (2) according to any of claims 1-9, the device further comprising a means for providing a gas flow through at least a part of the compartments.

11. Method for generating electric energy or performing an electrodialysis, comprising the steps of:

    - providing a device (2) according to any of claims 1-10;
    - electrically connecting the anode (10) and cathode (12).

**Patentansprüche**

1. Einrichtung (2) zum Durchführen eines Elektrodialyse- oder eines Umkehrelektrodialyseprozesses, enthaltend:

   - eine Anzahl von Anodenräumen (18), die mit einer Anode (10) versehen sind, die in einem Anodenfluidium platziert ist, das Reagenzien für eine Oxidationsreaktion enthält;
   - eine Anzahl von Kathodenräumen (20), die von den Anodenräumen getrennt sind, versehen mit einer Kathode (12), die in einem Kathodenfluidium platziert ist, das Reagenzien für eine Reduktionsreaktion enthält;
   - eine Anzahl von Kationenaustauschmembranen (4) und Anionenaustauschmembranen (6), die abwechselnd zwischen der Kathode und der Anode platziert sind, wobei Elektroträume (8) zwischen den Kationenaustauschmembranen und den Anionenaustauschmembranen gebildet sind; und

- eine Anzahl von Zwischenschichten (26,28), die zwischen zwei benachbarten Membranen in wenigstens einem Teil der Elektrolyträume platziert sind, wobei jede Schicht mit Kanälen versehen ist, **dadurch gekennzeichnet,** **dass** die Kanäle in verschiedenen Zwischenschichten vorgesehen sind und wobei die Kanäle (34,38) der Zwischenschichten so angeordnet sind, dass ein Fluid durch die Elektrolyträume strömt.

2. Einrichtung (2) nach Anspruch 1, wobei die Kanäle der Zwischenschichten sich im wesentlichen in einer Richtung erstrecken.

3. Einrichtung (2) nach Anspruch 2, wobei die Kanäle von wenigstens zwei benachbarten Zwischenschichten in einem Elektrolytraum in verschiedenen Richtungen angeordnet sind, so dass beim Gebrauch das Fluid durch die wenigstens zwei Schichten strömt.

4. Einrichtung (2) nach Anspruch 3, wobei Kanäle von den wenigstens zwei benachbarten Zwischenschichten sich in Längsrichtung mit einem Winkel von etwa 90° erstrecken.

5. Einrichtung (2) nach jedem der Ansprüche 1 bis 4, wobei die Kanäle in der Zwischenschicht so angeordnet sind, dass beim Gebrauch eine gleichmäßige Verteilung des Fluids über den Elektrolytraum erreicht ist.

6. Einrichtung (2) nach jedem der Ansprüche 1 bis 5, wobei die Zwischenschichten Silikondichtungen enthalten, die sich im wesentlichen über die gesamte Fläche der Membran erstrecken.

7. Einrichtung (2) nach den Ansprüchen 1 bis 6, wobei die Zwischenschichten mit einer Dicke von etwa 50 bis 500 $\mu$m, vorzugsweise von etwa 100 bis 300 $\mu$m vorgesehen sind.

8. Einrichtung (2) nach jedem der Ansprüche 1 bis 7, wobei die Zwischenschicht mit einer Porösität über 80%, vorzugsweise über 90% versehen ist.

9. Einrichtung (2) nach jedem der Ansprüche 1 bis 8, wobei die Zwischenschicht mit einer Membran integriert ist.

10. Einrichtung (2) nach jedem der Ansprüche 1 bis 9, wobei die Einrichtung außerdem Mittel enthält zum Erzeugen einer Gasströmung durch wenigstens einen Teil der Räume.

11. Verfahren zum Erzeugen von elektrischer Energie oder zum Durchführen einer Elektrodialyse, enthaltend die Schritte von:

- Bereitstellen einer Einrichtung (2) nach jedem der Ansprüche 1 bis 10;
- elektrisches Verbinden der Anode (10) und der Kathode (12).

## Revendications

1. Dispositif (2) pour effectuer une électrodialyse ou un processus d'électrodialyse inversée, comprenant :

- un certain nombre de compartiments d'anode (18) pourvus d'une anode (10) placée dans un fluide d'anode comprenant des réactifs pour une réaction d'oxydation ;
- un certain nombre de compartiments de cathode (20), séparés des compartiments d'anode, pourvus d'une cathode (12) placée dans un fluide de cathode comprenant des réactifs pour une réaction de réduction ;
- un certain nombre de membranes d'échange de cations (4) et de membranes d'échange d'anions (6), placées alternativement entre la cathode et l'anode, moyennant quoi des compartiments d'électrolyte (8) sont formés entre les membranes d'échange de cations et les membranes d'échange d'anions ; et
- un certain nombre de couches intermédiaires (26, 28) placées entre deux membranes adjacentes dans au moins une partie des compartiments d'électrolyte, dans lequel chaque couche est pourvue de canaux, **caractérisé en ce que** les canaux sont prévus dans différentes couches intermédiaires, et dans lequel les canaux (34, 38) des couches intermédiaires sont agencés de sorte qu'un fluide circule à travers les compartiments d'électrolyte.

2. Dispositif (2) selon la revendication 1, dans lequel les canaux d'une couche intermédiaire s'étendent sensiblement dans une direction.

3. Dispositif (2) selon la revendication 2, dans lequel les canaux d'au moins deux couches intermédiaires adjacentes dans un compartiment d'électrolyte sont agencés dans différentes directions de sorte qu'en utilisation le fluide circule à travers lesdites au moins deux couches.

4. Dispositif (2) selon la revendication 3, dans lequel les canaux desdites au moins deux couches intermédiaires adjacentes s'étendent dans une direction de longueur avec un angle d'environ 90°.

5. Dispositif (2) selon l'une quelconque des revendications 1 à 4, dans lequel les canaux sont agencés dans la couche intermédiaire de sorte qu'en utilisation une distribution uniforme du fluide sur le compartiment d'électrolyte soit obtenue.

6. Dispositif (2) selon l'une quelconque des revendications 1 à 5, dans lequel les couches intermédiaires comprennent des joints en silicone s'étendant sur la surface sensiblement entière de la membrane.

7. Dispositif (2) selon les revendications 1 à 6, dans lequel les couches intermédiaires sont pourvues d'une épaisseur d'environ 50 à 500 $\mu$m, de préférence d'environ 100 à 300 $\mu$m.

8. Dispositif (2) selon l'une des revendications 1 à 7, dans lequel la couche intermédiaire est pourvue d'une porosité supérieure à 80 %, de préférence supérieure à 90 %.

9. Dispositif (2) selon l'une quelconque des revendications 1 à 8, dans lequel la couche intermédiaire est intégrée à une membrane.

10. Dispositif (2) selon l'une quelconque des revendications 1 à 9, le dispositif comprenant en outre des moyens pour réaliser une circulation de gaz à travers au moins une partie des compartiments.

11. Procédé pour générer de l'énergie électrique ou effectuer une électrodialyse, comprenant les étapes :

- de fourniture d'un dispositif (2) selon l'une quelconque des revendications 1 à 10 ;
- de connexion électrique de l'anode (10) et de la cathode (12).

FIG. 1

FIG. 2

FIG. 3

EP 2 359 431 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20070138008 A